Europäisches Patentamt

European Patent Office

Office européen des brevets

(11) Veröffentlichungsnummer: 0 119 588
A2

## EUROPÄISCHE PATENTANMELDUNG

(21) Anmeldenummer: 84102769.1

(22) Anmeldetag: 14.03.84

(51) Int. Cl.³: **H 04 N 7/00, H 04 N 7/14**

(30) Priorität: 16.03.83 DE 3309403

(43) Veröffentlichungstag der Anmeldung: 26.09.84
Patentblatt 84/39

(84) Benannte Vertragsstaaten: DE FR GB IT

(71) Anmelder: **International Standard Electric Corporation, 320 Park Avenue, New York New York 10022 (US)**

(84) Benannte Vertragsstaaten: **FR GB IT**

(71) Anmelder: **Standard Elektrik Lorenz Aktiengesellschaft, Hellmuth-Hirth-Strasse 42, D-7000 Stuttgart 40 (DE)**

(84) Benannte Vertragsstaaten: **DE**

(72) Erfinder: **Böttle, Dietrich, Buchenweg 14, D-7335 Salach (DE)**
Erfinder: **Kaltbeitzel, Günter, Herman-Essig-Strasse 87, D-7414 Schwieberdingen (DE)**
Erfinder: **Schrodi, Karl, Lonteistrasse 11, D-7016 Gerlingen (DE)**

(74) Vertreter: **Villinger, Bernhard, Dipl.-Ing. et al, Standard Elektrik Lorenz AG Patent- und Lizenzwesen Postfach 300 929 Kurze Strasse 8, D-7000 Stuttgart 30 (DE)**

(54) Intergriertes Nachrichtensystem und Verfahren zum Aufbauen von Bildfernsprechverbindungen in einem solchen Nachrichtensystem.

(57) Integriertes Nachrichtensystem und Verfahren zum Aufbauen von Bildfernsprechverbindungen in einem solchen Nachrichtensystem.

In einem integrierten Nachrichtensystem (BIGFON), das Schmalband- und Breitbandverbindungen (Bildfernsprechen) ermöglicht, darf eine Bildverbindung erst durchgeschaltet werden, wenn die zugehörige Fernsprechverbindung steht. Dazu sind die Breitbandvermittlungsstellen (18A, 18B) durch zentrale Zeichenkanäle (19A, 19B) miteinander verbunden, über welche die zum Aufbau von Bildverbindungen in Fernverkehr erforderlichen Kennzeichen ausgetauscht werden. Den Teilnehmereinrichtungen (1A, 1B) ist jeweils eine Kenntonschaltung zugeordnet, durch die ein im Sprachband liegendes Prüfsignal übermittelt wird, mit dem vor dem Durchschalten der Bildverbindung überprüft wird, ob die Fernsprechverbindung aufgebaut ist.

1

D.Böttle - G.Kaltbeitzel - K.Schrodi 7-1-1

Integriertes Nachrichtensystem und Verfahren zum Aufbauen von Bildfernsprechverbindungen in einem solchen
Nachrichtensystem

Die Erfindung betrifft ein integriertes Nachrichtensystem, das das schmalbandige Fernsprechnetz und ein Breitbandnetz für die Bewegtbildübermittlung einschließt,
welches Breitbandvermittlungsstellen aufweist, die untereinander und mit den Teilnehmereinrichtungen verbunden
sind, wobei eine Bildverbindung erst dann durchgeschaltet werden kann, wenn die zugehörige Fernsprechverbindung aufgebaut ist. Außerdem betrifft die Erfindung ein
Verfahren zum Aufbauen von Bildfernsprechverbindungen in
einem solchen integrierten Nachrichtensystem.

Ein derartiges integriertes Nachrichtensystem, das neben
den herkömmlichen Fernsprechverbindungen auch breitbandige Bewegtbildverbindungen, die unterschiedlichen Datendienste und das Verteilen von Fernsehprogrammen ermöglicht, und dessen Einführung in nächster Zeit vorgesehen
ist, ist unter der Bezeichnung BIGFON bekannt. Der

ZT/P1-Bk/Bl
07.03.1983

-/-

0119588

2

D.Böttle et al 7-1-1

einzelne Teilnehmer ist an die ihm zugeordnete örtliche
Breitbandvermittlungsstelle über ein Lichtwellenleiter-
oder Glasfaserkabel verbunden, das die erforderliche
Kapazität aufweist, um auch die breitbandigen Fernseh-
und Bildfernseh-Signale zu übertragen. Der örtliche Bereich, der von einer Breitband(orts)vermittlungsstelle
und die an sie angeschlossenen Breitbanddienst-Teilnehmereinrichtungen gebildet wird, wird auch als BIFGON-Insel
bezeichnet. Wichtige Voraussetzung für den Aufbau einer
Bildverbindung ist, daß bereits eine Fernsprechverbindung über das öffentliche Fernsprechnetz besteht, die
auch während der Bildverbindung als Sprechweg benutzt
wird. Außerdem muß ein Auslösen der Fernsprechverbindung
immer auch den Abbau der Bildverbindung zur Folge haben.
Die Bildverbindung läuft über getrennte Breitbandleitungen
und Vermittlungseinrichtungen und kann nur mit dem Einverständnis beider Fernsprechteilnehmer zusätzlich zum
Sprechweg aufgebaut werden. Jedoch kann jeder der beiden
Teilnehmer unabhängig von dem anderen die Bildverbindung
zu jedem beliebigen Zeitpunkt auslösen, ohne auch die
Sprechverbindung trennen zu müssen.

Der Erfindung liegt die Aufgabe zugrunde, ein integriertes Nachrichtensystem und ein Verfahren zum Aufbauen
von Bildfernsprechverbindungen zu schaffen, das die genannten Voraussetzungen mit Sicherheit erfüllt.

Die Aufgabe der Erfindung wird bei einem integrierten
Nachrichtensystem der eingangs genannten Art dadurch gelöst, daß die Breitbandvermittlungsstellen durch zentrale

-/-

3

D.Böttle et al 7-1-1

Zeichenkanäle miteinander verbunden sind, über welche die zum Auf- und Abbau von Bildverbindungen erforderlichen Kennzeichen ausgetauscht werden, und daß den Teilnehmereinrichtungen jeweils eine Kenntonschaltung zum Übermitteln eines im Sprachband liegenden Prüfsignals zugeordnet ist, mit dem vor dem Durchschalten der Bildverbindungen das Bestehen der zugehörigen Fernsprechverbindung überprüft wird.

Die Aufgabe der Erfindung wird auch bei einem Verfahren der vorstehend genannten Art dadurch gelöst, daß die zum Aufbau einer Fern-Bildfernsprechverbindung benötigten Kennzeichen über einen zentralen Zeichenkanal übermittelt werden, und daß vor dem Durchschalten einer Bildverbindung das Bestehen der zugehörigen Fernsprechverbindung durch Übertragen eines im Sprachband liegenden Kenntons überprüft wird.

Vorteilhafte Weiterbildungen der Erfindung sind in den Unteransprüchen gekennzeichnet.

Die Vorteile der Erfindung liegen insbesondere darin, daß mit ihr Fehlverbindungen zuverlässig vermieden werden. Gegenüber einer auch denkbaren Inband-Signalisierung, bei der sämtliche Kennzeichen im Sprachband, d.h. über die Fernsprechverbindung, ausgetauscht werden, ist von Vorteil, daß die Fernsprechsignalisierungseinrichtungen nicht ständig empfangsbereit gehalten werden müssen, um beispielsweise Auslösewünsche der Teilnehmer für die Bildverbindung jederzeit erfüllen zu können. Die Störanfälligkeit verringert sich, Sprachschutzeinrichtungen sind nicht nötig. Außerdem

-/-

4

D.Böttle et al 7-1-1

muß mit der Erfindung die Fernsprechverbindung nach dem Auslösen durch die Teilnehmer nicht mindestens solange gehalten werden, bis die Signalisierung für die Bildaus- lösung abgeschlossen ist. Darüber hinaus ist das erfin- dungsgemäße Signalisierverfahren benutzerfreundlicher, da bei der gesamten Signalisierung über die Fernsprech- verbindung Störungen oder Unterbrechungen der Sprechverbindung bis zu einer Dauer von 10 bis 15 s zu erwarten sind, die sich bei jedem Signaliservorgang wieder- holen.

Ein Ausführungsbeispiel der Erfindung wird im folgenden anhand der Zeichnung erläutert. Es zeigen:

Figur 1    einen örtlichen Bereich eines integrierten Nachrichtensystems gemäß der Erfindung mit Schnittstellen zu anderen örtlichen Bereichen und zum öffentlichen Fernsprechnetz;

Figur 2    die Signalwege des erfindungsgemäßen Verfahrens zum Herstellen einer Bildfernsprechverbindung zwischen zwei Teilnehmern, die zu verschiedenen örtlichen Bereichen gehören;

Figur 3    die Struktur des Fernnetzes eines erfindungsgemäßen integrierten Nachrichtensystems, und

Figur 4    eine Kenntonschaltung des integrierten Nach- richtensystems nach den Figuren 1 bis 3.

-/-

D.Böttle et al 1-19-1

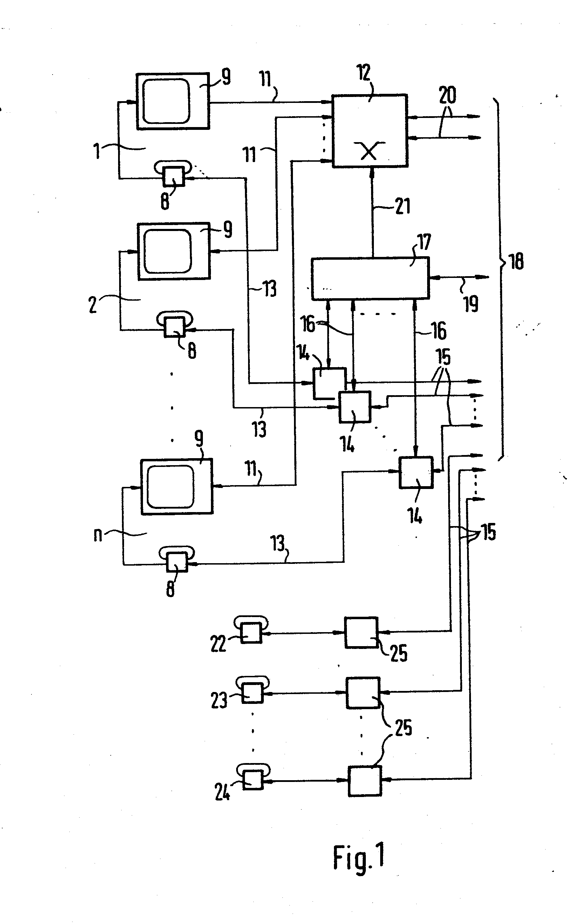

Der aus Figur 1 ersichtliche örtliche Bereich eines erfindungsgemäßen integrierten Nachrichtensystems – eine
sogenannte BIGFON-Insel – schließt Teilnehmereinrichtungen 1, 2, ... n ein, die am Bildfernsprechverkehr
teilnehmen und somit zumindest einen Telefonapparat 8
und ein Videogerät 9 aufweisen. Das Videogerät 9 schließt
ein Fernsehgerät und eine, in der Zeichnung nicht näher
dargestellte, Fernsehkamera ein. Letztere wird für den
Bildfernsprechverkehr benötigt und bleibt somit beim
Empfang von Fernsehprogrammen ausgeschaltet.

Die Teilnehmereinrichtungen 1 bis n sind in Digitaltechnik ausgeführt, d.h. sie empfangen und senden digitalisierte Video-, Sprach- und Datensignale. Die Videogeräte 9 sind jeweils über eine Breitbandleitung 11, die
als Lichtwellenleiter oder Glasfaserkabel ausgeführt ist,
mit einem Bildfernsprech-Koppelnetz 12 in der örtlichen
Breitbandvermittlungsstelle verbunden. Ein Breitband-
Verteilkoppelnetz, über das eine größere Anzahl Fernsehprogramme an die Teilnehmer verteilt wird und an
das diese ebenfalls über die Breitbandleitung 11 angeschlossen sind, ist in der Zeichnung nicht dargestellt,
da es die Erfindung nicht betrifft.

Die digitalen Telefonapparate 8 sind über eine Schmalbandkanal 13 mit jeweils einer Schmalbandeinrichtung
14 verbunden, in der zum einen die digitale Teilnehmereinrichtung
an das öffentliche Fernsprechnetz, solange dieses noch
analog ist, angepaßt wird. Die Schmalbandeinrichtung 14
enthält somit unter anderem Analog-Digital- und Digital-

-/-

D.Böttle et al 7-1-1


Analog-Wandler. Sie ist über die herkömmliche Zweidraht-Hauptanschlußleitung 15 mit der örtlichen Fernsprechvermittlungsstelle verbunden. Zum anderen ist eine oder mehrere Schmalbandeinrichtungenen 14 über eine Steuerleitung 16 mit einer Bildfernsprech-Steuerung 17 verbunden. Eine örtliche Breitbandvermittlungsstelle 18 der BIGFON-Insel schließt das Koppelnetz 12, die Steuerung 17 und die Schmalbandeinrichtungen 14 ein.

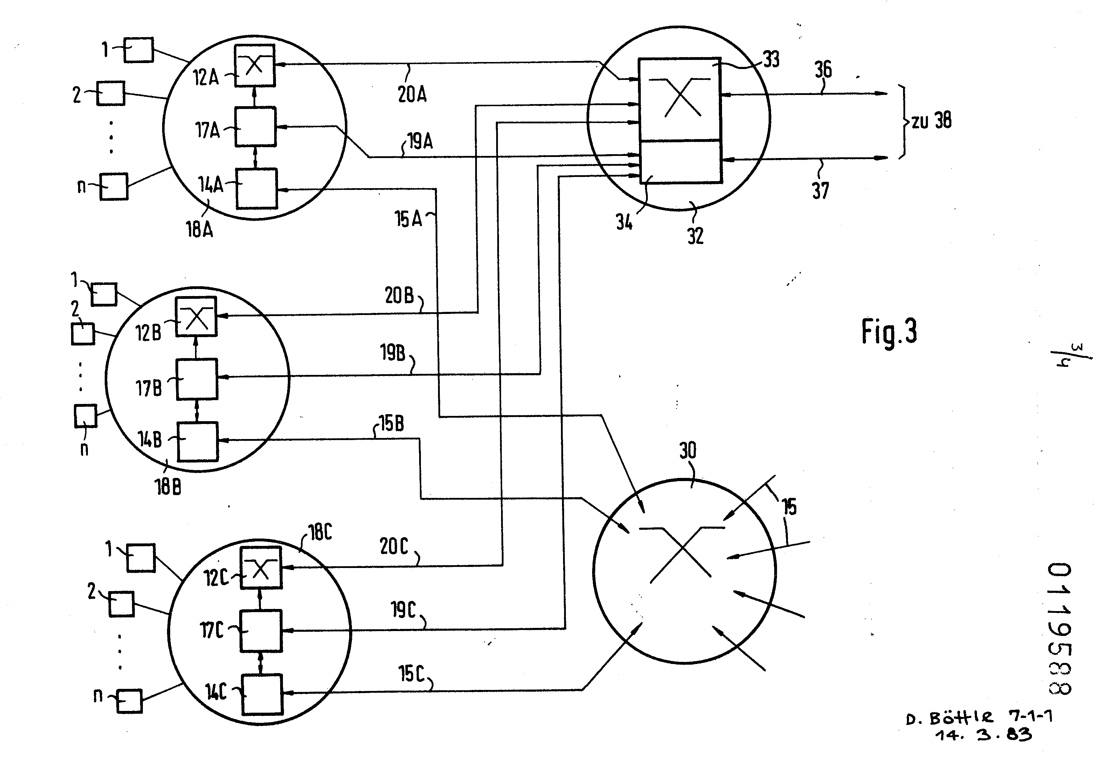

Durch die Bildfernsprech-Steuerung 17 wird sowohl im Intern- als auch im Externverkehr der Auf- und Abbau der Bildverbindungen über das Bildfernsprech-Koppelnetz gesteuert. Der interne Ortsverkehr wird dabei vollständig innerhalb einer BIGFON-Insel abgewickelt, wobei der jeweiligen Bildfernsprech-Steuerung 17 alle dazu notwendigen Informationen zur Verfügung stehen. Für den Extern- und Fernverkehr ist jedoch ein zusätzlicher Informationsaustausch zwischen den BIGFON-Inseln der beiden Teilnehmer notwendig. Die Bildfernsprech-Steuerung 17 ist über einen zentralen Zeichenkanal 19, der als Fernsprech- oder Datenstandleitung realisiert ist, mit einer Bildfernsprech-Breitband-Durchgangsvermittlungsstelle (vgl. Figur 3) verbunden. Das Bildfernsprech-Koppelnetz 12 ist durch mehrere Breitbandleitungen 20 mit dieser Bildfernsprech-Breitband-Durchgangsvermittlungsstelle und durch eine Signalleitung 21 mit der Bildfernsprech-Steuerung 17 verbunden.

Weitere Teilnehmereinrichtungen, die nicht bildfernsprechberechtigt sind, bestehen aus digitalen Telefonapparaten 22, 23 und 24, die jeweils über eine Schmalbandeinrichtung 25 und eine Hauptanschlußleitung 15 an

D.Böttle et al 7-1-1

das öffentliche Fernsprechnetz angeschlossen sind. Die Schmalbandeinrichtungen 25 benötigen naturgemäß keine Verbindungen mit der Bildfernsprech-Steuerung 17.

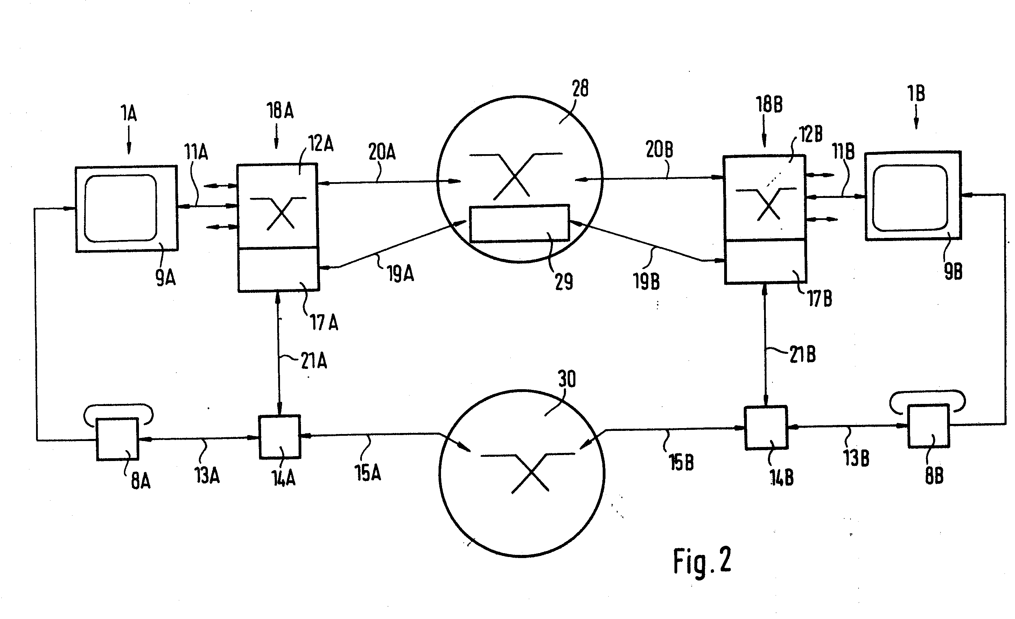

Aus Figur 2 sind die für eine Bildverbindung zwischen zwei Teilnehmern, die zu verschiedenen BIGFON-Inseln gehören, erforderlichen Signalwege ersichtlich. Eine Teilnehmereinrichtung 1A eines rufenden oder A-Teilnehmers, der eine Bildfernsprech-Verbindung zu einem anderen, dem gerufenen oder B-Teilnehmer wünscht, besteht im wesentlichen aus einem Telefonapparat 8 und einem Videogerät 9 mit den zugehörigen Übertragungseinrichtungen. Den gleichen Aufbau weist die Teilnehmereinrichtung 1B des gerufenen Teilnehmers auf. Zur Unterscheidung der Einrichtungen derjenigen BIGFON-Insel, zu der der A-Teilnehmer gehört, ist den Bezugszeichen der Buchstabe A angefügt (linke Seite von Figur 2). Entsprechend ist den Bezugszeichen, die zu den Einrichtungen der BIGFON-Insel des B-Teilnehmers gehören, der Buchstabe B angefügt (rechte Seite von Figur 2).

Die Bildfernsprech- oder Video-Signale werden über ein in der Zeichnung nur schematisch dargestelltes Bildfernsprech-Breitband-Vermittlungsnetz 28 mit zugehöriger Bildfernsprech-Breitbandvermittlungsnetz-Steuerung 29 durchgeschaltet. Die Sprachsignale werden über das in der Zeichnung ebenfalls nur schematisch angedeutete öffentliche Fernsprechnetz 30 durchgeschaltet.

Von der Teilnehmereinrichtung 1A gelangen die breitbandigen Videosignale über die Breitbandleitung 11A, das Bildfernsprech-Koppelnetz 12A, das Breitbandvermittlungs-

D.Böttle et al 7-1-1

netz 28, die Breitbandleitung 20B, das Bildfernsprech-
koppelnetz 12B und die Breitbandleitung 11B zu der Teilnehmereinrichtung 1B. Die Sprachsignale gelangen von dem
Telefonapparat 8A über den Schmalbandkanal 13A, die Schmalbandeinrichtung 14A, die Hauptanschlußleitung 15A, das
öffentliche Fernsprechnetz 30, die Hauptanschlußleitung
15B, die Schmalbandeinrichtung 14B und den Schmalbandkanal 13B zu dem Telefonapparat 8B. Die Breitbandleitung
11 und der Schmalbandkanal 13 können auch zu einer Leitung zusammengefaßt sein, die im Zeitvielfach betrieben
wird. Die Sprachsignale können, auch zusammen mit den
Signalisierkanälen, im Zeitvielfach über die Breitbandleitungen 11 mit übertragen werden. Auf den zentralen
Zeichenkanälen 19A und 19B, die die Bildfernsprech-Steuerungen 17A und 17B mit der Breitbandvermittlungsnetz-
Steuerung 29 verbinden, werden die der Bildfernsprech-
Signalisierung dienenden Kennzeichen ausgetauscht. Auf
den Steuerleitungen 21A und 21B werden Steuersignale
zwischen den Schmalbandeinrichtungen 14A, 14B und den
Bildfernsprech-Steuerungen 17A bzw. 17B ausgetauscht.
Neben den Sprachsignalen werden über die Hauptanschlußleitungen 15A, 15B auch noch Fernsprech-Signalisierungskennzeichen übertragen, wie noch zu erläutern sein wird.

Da die Breitband-Kanäle nur dann durchgeschaltet werden,
wenn eine Bildverbindung bestehen soll, müssen die Signalisierungskennzeichen auf einem anderen Weg übertragen
werden. Dazu sind die zentralen Zeichenkanäle 19A, 19B
vorgesehen, die dem Informationsaustausch zwischen den
verschiedenen BIGFON-Inseln dienen. (Die Struktur des Bildfern-
sprech-Fernnetzes wird anhand von Figur 3 erläutert.)

-/-

9

D.Böttle et al 7-1-1

Ein Verbindungsaufbau wird wie nachfolgend beschrieben eingeleitet, wobei hier vorausgesetzt wird, daß der Verbindungsaufbau von der Bildfernsprech-Steuerung 17A der BIGFON-Insel des A-Teilnehmers eingeleitet wird.

Meldet der A-Teilnehmer einen Bildfernsprech-Wunsch an, wobei er seine sogenannte Bildfernsprech-Zustimmung geben muß, so wird dieser Wunsch zusammen mit der gesamten Wählinformation von der Schmalbandeinrichtung 14A an die Bildfernsprech-Steuerung 17A gemeldet. Diese gibt die Rufnummer des gerufenen B-Teilnehmers zusammen mit der Rufnummer des A-Teilnehmers über den zentralen Zeichenkanal 19A, das Breitbandvermittlungsnetz 28 und den zentralen Zeichenkanal 19B an die Bildfernsprech-Steuerung 17B weiter. Die BIGFON-Insel des B-Teilnehmers ist durch die Vorwahl dieses Teilnehmers bestimmt. Existieren mehrere BIGFON-Inseln im selben Ortsnetz, so werden bereits in den Breitbanddurchgangsvermittlungsstellen Teile der Teilnehmer-Rufnummern ausgewertet. Ein Teilnehmer ohne Bildfernsprechanschluß wird hierbei als ein nicht vorhandener Teilnehmer angesehen.

Wird der B-Teilnehmer gefunden und festgestellt, daß er derzeitig noch keine Bildverbindung hat, so wird unter der Voraussetzung, daß er rechtzeitig seine Bildfernsprechzustimmung gegeben hat, diese zusammen mit der Rufnummer des B-Teilnehmers und der Rufnummer des A-Teilnehmers zur A-Insel zurückgemeldet. Dabei ist es jedoch prinzipiell gleichgültig, ob der A-Teilnehmer oder der B-Teilnehmer zuerst seine Bildfernsprech-Zustimmung

-/-

10

D.Böttle et al 7-1-1

gibt, sofern beide Zustimmungen innerhalb von z.B. 10 s eintreffen. Die Zuordnung der Daten auf den zentralen Zeichenkanälen 19A, 19B zu einem bestimmten Verbindungswunsch wird bei der weiteren Signalisierung jeweils durch die Angabe der Rufnummer des Teilnehmers der Gegenseite sichergestellt.

Im Ortsverkehr ist die Bildfernsprech-Vermittlungsstelle 18A des A-Teilnehmers gleichzeitig auch die Vermittlungsstelle des B-Teilnehmers, so daß ein Austausch von Signalisierungskennzeichen über den zentralen Zeichenkanal entfällt, während im Fernverkehr die beiden Vermittlungsstellen 18A, 18B über das Breitbandvermittlungsnetz 29 verbunden werden. Die Zielinformation der Signalisierung ist in den Teilnehmer-Rufnummern, die von den Breitbanddurchgangsvermittlungsstellen des Netzes ausgewertet werden, enthalten.

Nachfolgend wird die Prüfung des Bestehens einer Fernsprechverbindung beschrieben.

Die Bedingung, daß eine Bildverbindung zwischen zwei Teilnehmern nur dann aufgebaut werden darf, wenn zwischen ihnen bereits eine Sprechverbindung über das öffentliche Fernsprechnetz besteht, macht es erforderlich, das Bestehen einer solchen Verbindung auch zu überprüfen. Dazu genügt es nicht, festzustellen, daß beide Teilnehmer den Handapparat abgenommen haben und daß der eine der rufende und der andere der gerufene Teilnehmer ist, was in volldigitalen Netzen ja ohne weiteres

-/-

D.Böttle et al 7-1-1

möglich ist, sondern es muß tatsächlich ‘sichergestellt sein, daß beide Teilnehmer auch miteinander verbunden sind.

Schwierigkeiten können beispielsweise auftreten, wenn ein rufender A-Teilnehmer im Fernsprechnetz auf einen anderweitig belegten B-Teilnehmer trifft und trotzdem einen Bildfernsprech-Wunsch anmeldet, der bei gleichzeitiger Bildfernsprech-Zustimmung des B-Teilnehmers auch bearbeitet wird. In diesem Fall kann nur durch Feststellen der fehlenden Fernsprechverbindung zwischen den beiden Teilnehmern ein unzulässiger Aufbau einer Bildverbindung verhindert werden.

Erfindungsgemäß wird das Bestehen einer Fernsprechverbindung dadurch festgestellt, daß ein Prüfsignal von einem Teilnehmer über diese Verbindung zum anderen Teilnehmer geschickt wird. Als Prüfsignal wird ein im Sprachband liegender Kennton verwendet, der demzufolge die Sprachverbindung kurzfristig stört. Es muß dabei sichergestellt sein, daß der Prüfempfänger auf Störungen nicht anspricht; dies wird mit einer Schutzschaltung erreicht. Der verwendete Kennton weist eine Frequenz von 2100 Hz auf.

Da bei dem integrierten Nachrichtensystem die Breitbandvermittlungsstellen 18 von den Fernsprechvermittlungsstellen (vgl. Figur 3) getrennt sind, ist es immer dann notwendig, die bestehende Fernsprechverbindung mit einem Kenntonsignal zu überprüfen, wenn beim B-Teilnehmer keine Information über den A-Teilnehmer vorhanden ist.

-/-

D.Böttle et al 7-1-1

Dies ist grundsätzlich immer dann der Fall, wenn auch nur eine analoge Teilstrecke im Fernsprechpfad vorhanden ist.

Notwendig ist auch, daß der Kennton von der Seite des A-Teilnehmers angefordert und von der Seite des B-Teilnehmers zum A-Teilnehmer gesendet wird. Die Gründe dafür sind die folgenden. Der A-Teilnehmer hat seine Wahlinformation und weiß somit immer, welchen B-Teilnehmer er angewählt hat. (Wenn hier der Einfachheit halber von dem A-Teilnehmer geredet wird, ist genau genommen die Teilnehmereinrichtung 1A und die in der zugeordneten Vermittlungsstelle 18A enthaltene Information gemeint.) Der B-Teilnehmer könnte gerade anderweitig belegt sein und über seine Fernsprechverbindung zufällig zu diesem Zeitpunkt ein Signal bekommen, das seinen Kennton-Empfänger ansprechen ließe (z.B. Pfeifen des Partners), wohingegen der anfordernde A-Teilnehmer nur mit dem gewünschten B-Teilnehmer verbunden sein kann, oder aber keine Verbindung hat. Außerdem können durch das Anfordern die Anschaltzeitpunkte und -zeitdauern für den Kennton-Sender und -Empfänger abhängig vom Signalisierverfahren auf dem zentralen Zeichenkanal optimal eingestellt werden, was einerseits eine größtmögliche Sicherheit des Prüfverfahrens und andererseits ein Minimum an Störung auf dem Fernsprechkanal zur Folge hat.

Die Aussendung des Kenntonsignals beim B-Teilnehmer wird von der Bildfernsprech-Steuerung 17A des A-Teilnehmers über den zentralen Zeichenkanal 19 angefordert und von der Bildfernsprech-Steuerung 17B über die Schmalband-

D.Böttle et al 7-1-1

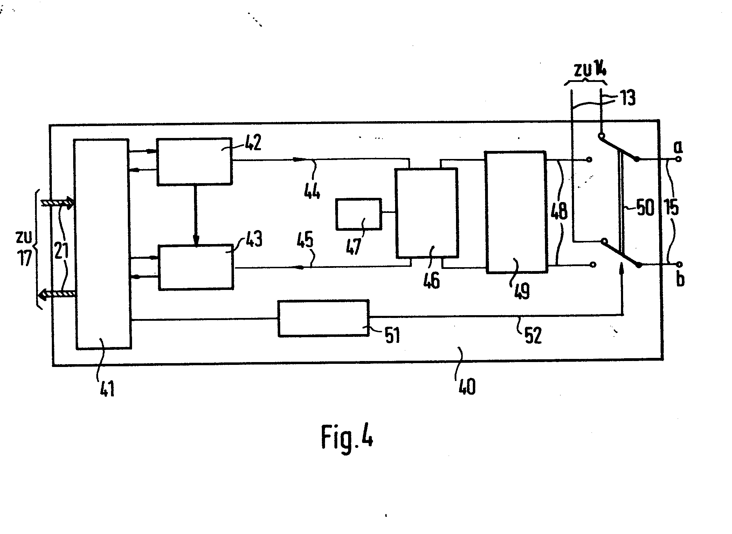

einrichtung 14B des B-Teilnehmers eingeleitet. Senden und Empfangen des Kenntonsignals erfolgen mittels einer in den Schmalbandeinrichtungen 14 enthaltenen Kenntonschaltung , die anhand von Fig. 4 noch erläutert wird. Die Schmalbandeinrichtung 14A des A-Teilnehmers meldet den Empfang des Kenntonsignals an die zugehörige Bildfernsprech-Steuerung 17A, worauf diese das Durchschalten der Bildverbindung einleitet. Wird das Kenntonsignal nicht innerhalb eines Zeitfensters von etwa 2 s erkannt, so nimmt die Bildfernsprech-Steuerung 17A an, daß keine Fernsprechverbindung besteht und bricht den Verbindungsaufbau ab. Das Kenntonsignal wird für die Dauer von etwa 1 s ausgesendet und im Empfänger nach etwa 500 ms Dauerempfang akzeptiert.

Eine Bildverbindung wird wie nachfolgend beschrieben durchgeschaltet.

Die Bildfernsprech-Steuerung 17A der BIGFON-Insel des A-Teilnehmers schickt nach dem Empfang des Kenntonsignals eine positive Antwort über den zentralen Zeichenkanal 19 und die Bildfernsprech-Breitbandvermittlungsnetz-Steuerung 29 zur Bildfernsprech-Steuerung 17B. Die Bildfernsprech-Steuerung 17B belegt daraufhin eine freie Breitbandleitung 20B zu ihrer nächstgelegenen Bildfernsprech-Breitband-Durchgangsvermittlungsstelle 32 und sendet ihr über den zentralen Zeichenkanal 19B eine Belegungsanforderung. Wird dort eine weiterführende freie Breitbandleitung 20A zur Bildfernsprech-Vermittlungsstelle 18A oder, falls die Verbindung über die zweite Hierachiestufe des Bildfernsprech-Breitband-

14

D.Böttle et al 7-1-1

Vermittlungsnetzes 28 gehen muß, eine freie Breitbandleitung 36 zur Bildfernsprech-Breitband-Durchgangsvermittlungsstelle 38 gefunden, so wird eine Belegungsquittung zur Bildfernsprech-Steuerung 17B zurückgeschickt und diese schaltet die belegte Breitbandleitung
20B durch. Dasselbe Verfahren wiederholt sich auch zwischen den Bildfernsprech-Breitband-Durchgangsvermittlungsstellen der verschiedenen Hierarchiestufen, bis
schließlich die Bildfernsprech-Vermittlungsstelle 18A
des A-Teilnehmers erreicht ist. Wird für irgendeinen
Bildverbindungsabschnitt keine weiterführende freie
Breitbandleitung gefunden, so wird in beide Richtungen
(zur Bildfernsprech-Vermittlungsstelle 18A und zur Bild-
fernsprech-Vermittlungsstelle 18B) über den zentralen
Zeichenkanal eine Besetzt-Meldung abgeschickt und der
Verbindungsaufbau wird abgebrochen. Dabei werden natürlich auch alle beim Aufbauversuch belegten oder
schon durchgeschalteten Bildverbindungsabschnitte wieder freigegeben.

Zumindest im Fernverkehr ist es sehr zweckmäßig, wenn
der Aufbau der Bilderverbindung immer von dem B-Teilnehmer aus erfolgt, da dann bei einer stufenweisen
Durchschaltung mit dem Durchschalten des letzten Bildverbindungsabschnittes zum A-Teilnehmer auch die Gebührenzählung immer zum richtigen Zeitpunkt einsetzen
kann.

Zum Abbau einer Bildverbindung sei folgendes bemerkt.

-/-

D.Böttle et al 7-1-1

Wünscht ein Teilnehmer während des Aufbaus oder des Bestehens einer Bildverbindung eine Unterbrechung des Bildkontaktes ohne Trennung der Sprachverbindung, so wird dies über seine Schmalbandeinrichtung 14 der Bildfernsprech-Steuerung 17 seiner BIGFON-Insel mitgeteilt. Diese schickt über den zentralen Zeichenkanal 19, der über die Breitbanddurchgangsvermittlungsstellen geführt wird, eine Auslöseanforderung an die Bildfernsprech-steuerung 17 der Gegenseite, und alle Bildfernsprech-Steuerungen geben über ihre Bildfernsprech-Koppelnetze die belegten Breitbandleitungen wieder frei. Wünschen beide Teilnehmer erneut eine Bildverbindung, so erfolgt erneut die beschriebene Aufbauprozedur.

Löst ein Teilnehmer die Fernsprechverbindung aus, während noch eine Bildverbindung besteht, so wird diese ebenfalls sofort getrennt. Auch in diesem Fall werden zwischen den beteiligten Bildfernsprech-Steuerungen über den zentralen Zeichenkanal eine Auslöseanforderung und eine Auslösequittung ausgetauscht. Auch dabei sind beide Teilnehmer grundsätzlich gleichberechtigt, d.h. die Auslösung kann sowohl durch den rufenden als auch durch den gerufenen Teilnehmer erfolgen.

Das aus Figur 3 im Ausschnitt ersichtliche integrierte Nachrichtensystem weist drei örtliche Vermittlungsbereiche oder BIGFON-Inseln 18A, 18B und 18C auf, an die jeweils Teilnehmerendeinrichtungen 1, 2, ..., n angeschlossen sind, und die jeweils ein Bildfernsprech-Koppelnetz 12, eine Bildfernsprech-Steuerung 17 und

-/-

D.Böttle et al 7-1-1

c

Schmalbandeinrichtungen 14 enthalten. Sie sind über Breitband- oder Bildleitungen 20A, 20B und 20C mit einer Bildfernsprech-Breitband-Durchgangsvermittlungsstelle 32, d.h. mit deren Bildfernsprech-Koppelnetz 33 verbunden. Die Bildfernsprech-Steuerungen 17A, 17B und 17C sind über die zentralen Zeichenkanäle 19A, 19B und 19C mit einer Bildfernsprech-Breitbanddurchgangsvermittlungsstellen-Steuerung 34 verbunden. Die Schmalbandeinrichtungen 14A, 14B und 14C sind über die Hauptanschlußleitungen 15A, 15B und 15C mit dem öffentlichen Fernsprechnetz 30, d.h. mit der zugehörigen Fernsprechvermittlungsstelle verbunden.

Die Durchgangsvermittlungsstelle 32 gehört einer ersten Hierarchiestufe an, über eine Breitbandleitung 36 und einen zentralen Zeichenkanal 37 ist sie mit einer, in - der Zeichnung nur angedeuteten, Bildfernsprech-Breitband-Durchgangsvermittlungsstelle 38 einer zweiten Hierarchiestufe verbunden, an die auch weitere Durchgangsvermittlungsstellen 32 der ersten Hierarchiestufe angeschlossen sind. Entsprechend enthält das öffentliche Fernsprechnetz weitere Hauptanschlußleitungen 15, die zu den Schmalbandeinrichtungen weiterer BIGFON-Inseln führen. Denkbar sind auch noch höhere Hierarchiestufen.

Die Signalisierungskennzeichen für den Externverkehr werden über das Bildfernsprech-Breitbandvermittlungsnetz, d.h. über eine oder beide Hierarchiestufen ausgetauscht. Dazu dienen die zentralen Zeichenkanäle 19A,

-/-

17

D.Böttle et al 7-1-1

19B und 19C zwischen den einzelnen BIGFON-Inseln und ihrer Bildfernsprech-Breitband-Durchgangsvermittlungsstelle 32 der ersten Hierarchiestufe sowie zwischen jeder Durchgangsvermittlungsstelle der ersten Hierarchiestufe und der zugehörigen Durchgangsvermittlungsstelle 38 der zweiten Hierarchiestufe.

Eine aus Figur 4 ersichtliche Kenntonschaltung 40, die in den Schmalbandeinrichtungen 14 (z.B. Figur 1) enthalten ist, weist eine Steuerschaltung 41 auf, die über Steuerleitungen 21 mit der Bildfernsprech-Steuerung 17 verbunden ist. Die Steuerschaltung 41 sendet und empfängt Signale an und von einem Sender 42 und einem Empfänger 43. Über eine Vierdrahtleitung gehend 44 und kommend 45 und einen Gabelübertrager 46 mit Nachbildung 47 sind der Sender 42 und der Empfänger 43 mit einer Zweidrahtausgangsleitung 48 verbunden, die mit einer Überspannungs-Schutzschaltung 49 versehen ist. Die Ausgangsleitung 48 kann durch einen Umschalter 50, der von einer Relaisansteuerung 51 über eine Steuerleitung 52 betätigt wird, mit der zu der öffentlichen Vermittlungsstelle führenden Zweidrahthauptanschlußleitung 15 verbunden werden.

-/-

0119588

D.Böttle et al 7-1-1

Im Ruhezustand und im normalen Gesprächszustand verbindet der Umschalter 50 den Telefonapparat mit der Anschlußleitung 15 und damit mit dem öffentlichen Fernsprechnetz. Soll nun aber vor dem Durchschalten einer Bildverbindung überprüft werden, ob die zugehörige Fernsprechverbindung besteht, so bewirkt die Steuerschaltung 41 ein Umlegen des Umschalters 50. Ist die Kenntonschaltung 40 die der Schmalbandeinrichtung 14B des B-Teilnehmers, so veranlaßt die Steuerschaltung 41, daß der Sender 42 ein Kenntonsignal aussendet, das über die Anschlußleitung 15 und das öffentliche Fernsprechnetz zu der Schmalbandeinrichtung 14A des A-Teilnehmers gelangen soll. Ist das Gespräch tatsächlich durchgeschaltet, so wird das 2100-Hz-Signal in dem Empfänger 43 der Kenntonschaltung 40 des A-Teilnehmers, deren Ausgangsleitung 48 ebenfalls mit der Anschlußleitung 15 verbunden ist, empfangen und an die Steuerschaltung 41 gemeldet, die eine entsprechende Meldung an die Bildfernsprech-Steuerung 17 weiterleitet. Danach kann die Bildverbindung zwischen dem A- und B-Teilnehmer durchgeschaltet werden.

-/-

D.Böttle - G.Kaltbeitzel - K.Schrodi 7-1-1

Patentansprüche

1. Integriertes Nachrichtensystem, das das schmalbandige Fernsprechnetz und ein Breitbandnetz für die Bewegtbildübermittlung einschließt, welches Breitbandvermittlungsstellen aufweist, die untereinander und mit den Teilnehmereinrichtungen verbunden sind, wobei eine Bildverbindung erst dann durchgeschaltet werden kann, wenn die zugehörige Fernsprechverbindung aufgebaut ist, d a d u r c h   g e k e n n z e i c h n e t , daß die Breitbandvermittlungsstellen (18) durch zentrale Zeichenkanäle (19) untereinander verbunden sind, über welche die zum Auf- und Abbau von Bildverbindungen erforderlichen Kennzeichen ausgetauscht werden, und daß den Teilnehmereinrichtungen (1, 2, ... n) jeweils eine Kenntonschaltung (40) zum Übermitteln eines im Sprachband liegenden Prüfsignals zugeordnet ist, mit dem vor dem Durchschalten der Bildverbindung das Bestehen der zugehörigen Fernsprechverbindung überprüft wird.

ZT/P1-Bk/Bl
07.03.1983                                                     -/-

D.Böttle et al 7-1-1

2. Nachrichtensystem nach Anspruch 1, dadurch gekennzeichnet, daß die Kenntonschaltung (40) in einer der einzelnen Bildfernsprech-Teilnehmereinrichtung (1, 2, ... n) zugeordneten Schmalbandeinrichtung (14) enthalten ist.

3. Nachrichtensystem nach Anspruch 2, dadurch gekennzeichnet, daß die Schmalbandeinrichtung (14) mit einer der Breitbandvermittlungsstelle (18) zugeordneten Bildfernsprech-Steuerung (17) verbunden ist.

4. Nachrichtensystem nach Anspruch 3, dadurch gekennzeichnet, daß die zentralen Zeichenkanäle (19A, 19B) an die Bildfernsprech-Steuerungen (17A, 17B) der miteinander verbundenen Breitbandvermittlungen (18A, 18B) angeschlossen sind.

5. Nachrichtensystem nach einem der Ansprüche 2 bis 4, dadurch gekennzeichnet, daß die Schmalbandeinrichtung (14) über eine Hauptanschlußleitung (15) an das öffentliche Fernsprechnetz (30) angeschlossen ist.

6. Verfahren zum Aufbauen von Bildfernsprechverbindungen in einem integrierten Nachrichtensystem, wobei eine Bildverbindung erst dann durchgeschaltet werden kann, wenn die zugehörige Fernsprechverbindung aufgebaut ist, d a d u r c h g e k e n n z e i c h n e t, daß die zum Aufbau einer Fernverbindung benötigten vermittlungstechnischen Zeichen über einen zentralen Zeichenkanal übermittelt werden, und daß vor dem Durchschalten einer Bild-

D.Böttle et al 7-1-1

verbindung das Bestehen der zugehörigen Fernsprechverbindung durch Übertragen eines im Sprachband liegenden
Kenntonsignals überprüft wird.

7.   Verfahren nach Anspruch 6, dadurch gekennzeichnet,
daß das Kenntonsignal von einer Steuereinrichtung des
rufenden Teilnehmers angefordert und das Aussenden des
Kenntonsignals von einer Steuereinrichtung des gerufenen Teilnehmers veranlaßt wird.

8.   Verfahren nach Anspruch 6 oder 7, dadurch gekennzeichnet, daß die Bildverbindung von dem gerufenen
Teilnehmer aus durchgeschaltet wird.

0119588

Fig.1

D.Böhle 7-1-1
14. 3. 83

Fig. 2

Fig.3

0119588

D. Böttle 7-1-1
14. 3. 83

0119588

Fig.4

D. Böttle 7-1-1
14. 3. 83